# EUROPÄISCHE PATENTSCHRIFT

(11) **EP 0 822 387 B1**
(45) Veröffentlichungstag und Bekanntmachung des Hinweises auf die Patenterteilung: **23.10.2002**
(21) Anmeldenummer: 97111399.8
(22) Anmeldetag: 05.07.1997
(51) Int. Cl.: G01B 5/012

(54) **Koordinatenmessgerät mit Kollisionsschutz**
Coordinates measuring apparatus with collision protection
Appareil de mesure de coordonnées avec protection de collision

(30) Priorität: 31.07.1996 DE 19630823
(43) Veröffentlichungstag der Anmeldung: 04.02.1998
(73) Patentinhaber: Carl Zeiss, 89518 Heidenheim (Brenz) (DE); Carl-Zeiss-Stiftung, trading as Carl Zeiss, 89518 Heidenheim (Brenz) (DE)
(72) Erfinder: Matzkovits, Berthold, 89547 Gerstetten (DE)

(56) Entgegenhaltungen:
- EP-A- 0 123 835
- EP-A- 0 414 643
- EP-A- 0 608 655
- DE-A- 3 725 207
- DE-A- 4 330 873
- DE-A- 19 501 178
- US-A- 4 445 184
- PATENT ABSTRACTS OF JAPAN vol. 018, no. 009 (M-1538), 10. Januar 1994 & JP 05 253871 A (MATSUSHITA ELECTRIC IND CO LTD), 5. Oktober 1993
- PATENT ABSTRACTS OF JAPAN vol. 013, no. 146 (P-854), 11. April 1989 & JP 63 308607 A (TOSHIBA CORP), 16. Dezember 1988
- PATENT ABSTRACTS OF JAPAN vol. 010, no. 212 (P-480), 24. Juli 1986 & JP 61 050208 A (HITACHI LTD), 12. März 1986

## Beschreibung

Die Erfindung betrifft ein Koordinatenmeßgerät zur Vermessung von Werkstücken mit einem beweglichen Meßarm zur Aufnahme zumindest einer auswechselbaren Meßsensorik, wobei der Meßarm einen Kollisionsschutz umfaßt, der bei Kollision der Sensorik mit einem Gegenstand quer zur Längsachse des Meßarmes auslenkbar ist und hierdurch eine Beschädigung der Sensorik vermeidet.

Derartige Koordinatenmeßgeräte sind bereits seit längerem aus dem Stand der Technik bekannt. Die Meßgeräte sind hierbei üblicherweise derart ausgeführt, daß der Meßarm und damit die am Meßarm befestigte Meßsensorik in drei aufeinander senkrecht stehenden Richtung bewegt werden kann, wobei die Meßsensorik ihrerseits entweder einen mechanischen Taster oder einen optischen Taster zur Vermessung der Werkstücke aufweist.

Da es bei Koordinatenmeßgeräten durch Fehlbedienung oder durch Lageabweichung des zu vermessenden Werkstückes leicht zu Kollisionen kommen kann und hierdurch möglicherweise die oftmals relativ teure Meßsensorik oder andere Teile des Koordinatenmeßgerätes zerstört werden können, wurde in herkömmlichen Koordinatenmeßgeräten der Meßarm des Koordinatenmeßgerätes mit einem Kollisionsschutz ausgerüstet, der bei Kollision der Sensorik mit einem Gegenstand quer zur Längsachse des Meßarmes auslenkt. Üblicherweise wird durch die Auslenkung des Kollisionsschutzes zusätzlich auch die weitere Bewegung des Koordinatenmeßgerätes gestoppt. Hierdurch kann eine Beschädigung der Sensorik vermieden werden.

Der Kollisionsschutz herkömmlicher Koordinatenmeßgeräte ist hierbei üblicherweise derart ausgeführt; daß die Meßsensorik hinsichtlich des Gewichtes und der Dimensionierung festgelegte Voraussetzungen erfüllen muß, um eine einwandfreie Funktion des Kollisionsschutzes zu gewährleisten. Seit einiger Zeit sind jedoch Bestrebungen im Gange Koordinatenmeßgeräte flexibler zu gestalten, um diese unterschiedlichen Aufgaben zugänglich zu machen. Beispielsweise wurde vorgeschlagen die Koordinatenmeßgeräte gleichzeitig als Fräswerkzeuge und/oder als Anreißwerkzeuge zur Bearbeitung von z.B. Plastilinmodellen zu verwenden, so daß dann die Meßsensorik gegen entsprechende Bearbeitungseinheiten ausgetauscht werden muß. Da zur Durchführung dieser Bearbeitungsvorgänge wesentlich größere Drehmomente und Kräfte vom Meßarm aufgenommen werden müssen, kann bei bisherigen Koordinatenmeßmaschinen mit einem derartigen Kollisionsschutz ein Austausch der Meßsensorik gegen eine Bearbeitungseinheit entweder nur mit einem größeren Umrüstaufwand oder aber garnicht durchgeführt werden, da der Kollisionsschutz die entstehenden Drehmomente nicht aufnehmen kann, ohne hierbei auszulenken.

Aus der DE-AI-4 330 873 ist ein Koordinatenmeßgerät bekannt, wobei eine Erkennungseinheit die Meßsensorik automatisch erkennt und dementsprechend die Signalverarbeitungsparameter einstellt.

Aufgabe der vorliegenden Erfindung ist es deshalb ein Koordinatenmeßgerät mit einem oben beschriebenen Kollisionsschutz vorzuschlagen, das auf einfache Art und Weise mit unterschiedlichen Meßsensoriken und Bearbeitungseinheiten betrieben werden kann.

Die Aufgabe wird gemäß dem kennzeichnenden Teil des Anspruchs 1 gelöst.

Der Grundgedanke der Erfindung ist darin zu sehen, daß im Koordinatenmeßgerät eine Erkennungseinheit vorgesehen ist, die die Meßsensorik bzw. die Bearbeitungseinheit automatisch erkennt und daß ferner eine mit der Erkennungseinheit verbundene Spanneinheit vorgesehen ist, die entsprechend dem Ergebnis der Erkennungseinheit das zum Auslenken des Kollisionsschutzes erforderliche Drehmoment einstellt.

Hierdurch kann gewährleistet werden, daß problemlos am Meßarm des Koordinatenmeßgerätes unterschiedliche Meßsensoriken oder Bearbeitungseinheiten durch das Koordinatenmeßgerät erfaßt werden können und daß das zum Auslenken des Kollisionsschutzes erforderliche Drehmoment ebenfalls voll automatisch angepaßt wird. Hierdurch wird das Koordinatenmeßgerät sehr einfach für unterschiedliche Aufgaben einsetzbar.

Die Erkennungseinheit prüft hierbei eine in der Meßsensorik oder Bearbeitungseinheit vorliegende Erkennungsinformation in Form beispielsweise einer analogen oder einer digitalen Information. Im einfachsten Fall kann beispielsweise das Vorliegen oder das Nichtvorliegen eines Widerstandes in der befestigten Meßsensorik bzw. Bearbeitungseinheit geprüft werdem. Anhand des vorhandenen Widerstandswertes kann dann die besagte Meßsensorik bzw. Bearbeitungseinheit erkannt werden wobei die Erkennungseinheit an die Spanneinheit ein Signal gibt über das das zur Auslenkung notwendige Drehmoment eingestellt wird.

Auch die Spanneinheit kann in Abhängigkeit von der Konstruktion des Kollisionsschutzes unterschiedlich ausgebildet sein. So sind beispielsweise aus dem Stand der Technik Koordinatenmeßgeräte bekannt, bei denen der Kollisionsschutz so am Meßarm gelagert ist, daß der Kollisionsschutz durch die Druckkraft einer zwischen dem Kollisionsschutz und dem Meßarm vorgespannten Feder in seiner Normalposition gehalten wird. Für diesen Fall könnte die Spanneinheit eine Druckeinheit umfassen, die die Vorspannung der Feder unterschiedlich erhöht oder verringert.

In dem hier näher dargestellten, besonders vorteilhaften Ausführungsbeispiel ist der Kollisionsschutz hingegen derart ausgebildet, daß er durch Zugkraft zwischen dem Meßarm und dem Kollisionsschutz in seiner Normalposition gehalten wird, wobei die exakte Position des Kollisionsschutzes durch drei Sternförmig angeordnete Lager festgelegt wird. Dies hat den Vorteil, daß der Kollisionsschutz wesentlich weiter ausgelenkt werden kann als bei herkömmlichen Koordinatenmeßmaschinen. Die entsprechende Spanneinheit umfaßt hierfür eine Zugeinheit, die den Meßarm und den Kollisionsschutz miteinander verbindet und den Kollisionsschutz und den Meßarm mit einer durch die Erkennungseinheit festgelegten Zugkraft gegeneinander zieht.

Vorzugsweise umfaßt die Zugeinheit einen pneumatischen Zylinder und eine hierin geführte Kolbenstange. Der pneumatische Zylinder ist hierbei mit dem Meßarm verbunden und die Kolbenstange beweglich mit dem Kollisionsschutz, so daß in Abhängigkeit vom Druck im Zylinder die Zugkraft auf den Kollisionsschutz verringert oder vergrößert werden kann. Der pneumatische Zylinder ist hierbei zur Aufbringung der Zugkraft vorzugsweise als sogenannter doppelt wirkender Zylinder, ausgestaltet, dessen Kolbenstange sowohl aus dem Kolben herausgedrückt werden kann wie auch hineingezogen werden kann. Dazu ist der Zylinder an der Austrittsöffnung der Kolbenstange ebenfalls abgedichtet und mit einem zweiten Druckluftanschluß versehen.

Selbstverständlich kann die Zugeinheit aber auch elektrisch oder mechanisch ausgeführt sein. Beispielsweise kann ein mit dem Meßarm verbundener Elektromotor vorgesehen werden, der über ein Schneckengetriebe eine Trommel antreibt. Auf der Trommel wird dann ein Seil aufgewickelt, das an seinem anderen Ende mit dem Kollisionsschutz verbunden ist.

Die Spanneinheit sollte vorzugsweise derart am Kollisionsschutz befestigt sein, daß die Zugkraft in etwa symmetrisch auf die zwischen dem Meßarm und dem Kollisionsschutz befindlichen Lager wirkt.

Für den besonderen Fall, daß es sich bei dem Koordinatenmeßgerät um ein Ständermeßgerät handelt und somit der Meßarm horizontal ausgerichtet ist kann besonders vorteilhaft zusätzlich wenigstens eine Vorspanneinheit vorgesehen werden, die das durch die Gewichtskraft des Kollisionsschutzes und der Meßsensorik entstehende Drehmoment aufnimmt. Im Falle des besonders Vorteilhaften Kollisionsschutzes, der durch Zugkraft in seiner Normalposition gehalten wird handelt es sich hierbei um eine zweite Zugeinheit die mit dem Meßarm und dem Kollisionsschutz verbunden ist, und diese gegeneinander zieht.

Die Vorspanneinheit kann zusätzlich derart ausgestaltet sein, daß auch die durch die Gewichtskraft des Kollisionsschutzes und der Meßsensorik entstehende Querkraft aufgenommen wird.

Durch die Aufnahme des Drehmomentes und der Querkraft kann erreicht werden, daß bei aufgespannter Meßsensorik die Kräfteverteilung auf die drei Lager, weitestgehend symmetrisch ist und im wesentlichen in Richtung der Längsachse des Meßarms wirkt. Dies hat den Vorteil, daß das notwendige Drehmoment, um den Kollisionsschutz über jeweils zwei der drei Lager auszulenken, für alle drei Möglichkeiten gleich groß ist. Außerdem kann hierdurch für jede der möglichen Auslenkungsrichtungen das zur Auslenkung des Kollisionsschutzes notwendige Drehmoment minimiert werden, sodaß der Kollisionsschutz bereits bei relativ kleinen Drehmomenten ausgelenkt wird, um hierdurch die empfindliche Meßsensorik zu schützen. Außerdem kann die Spanneinheit ungenützt bleiben und braucht erst dann eingesetzt zu werden, wenn eine Bearbeitungseinheit aufgesetzt wird.

Weitere Vorteile und Weiterbildungen der Erfindung gehen aus den Figuren hervor. Hierin zeigen:
- Fig. 1: Ein erfindungsgemäßes Koordinatenmeßgerät mit Kollisionsschutz;
- Fig. 2: ein schematisches Blockschaltbild der Erkennungseinheit und der Spanneinheit;
- Fig. 3: ein erfindungsgemäßer Kollisionsschutz in der Aufsicht;
- Fig. 4: den Kollisionsschutz gemäß Fig. 3 in der Seitenansicht.

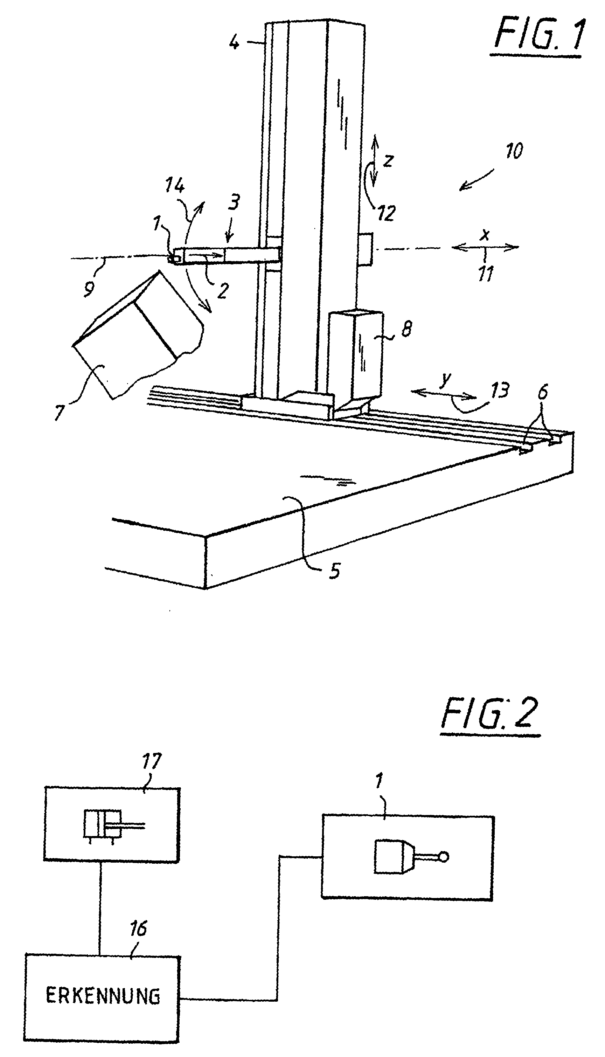

Figur 1 zeigt ein besonders vorteilhaftes Koordinatenmeßgerät zur Vermessung von Werkstücken (7) gemäß der Erfindung. Das Koordinatenmeßgerät (10) ist in sogenannter Ständerbauweise ausgeführt und weist einen beweglichen Meßarm (3) auf. Der Meßarm ist über einen geeigneten Schlitten im Ständer (4) derart gelagert, daß er sowohl in der horizontalen gemäß dem Pfeil (11) verfahren werden kann, wie auch in der vertikalen gemäß dem dargestellten Pfeil (12). Der Ständer (4) seinerseits ist in Bahnen (6) des Maschinenbetts (5) entlang der durch den Pfeil (13) dargestellten Bewegungsrichtung seitlich am zu vermessenden Werkstück (7) bewegbar. Der Meßarm (3) dient zur Aufnahme einer auswechselbaren Meßsensorik (1), die üblicherweise über eine aus dem Stand der Technik bereits hinreichend bekannte, hier nicht näher gezeigte Wechselhalterung am Meßarm (3) befestigt ist. Zusätzlich umfaßt der Meßarm im Bereich der Meßsensorik (1) einen Kollisionsschutz (2), der bei Kollisionen der Meßsensorik (1) mit einem Gegenstand quer zur Längsachse (9) des Meßarmes auslenkbar ist und hierdurch eine Beschädigung der Sensorik vermeidet. Wird beispielsweise der Meßarm (3) in dem hier gezeigten Koordinatenmeßgerät soweit abgesenkt, daß die Meßsensorik (1) auf dem Werkstück (7) aufliegt, so knickt der Kollisionsschutz (2) entsprechend dem Pfeil (14) einfach nach oben ab und vermeidet hierdurch eine Zerstörung der Meßsensorik (1).

Wie bereits Eingangs erwähnt ist das in Figur 1 gezeigte Koordinatenmeßgerät (10) neben der Aufnahme der Meßsensorik (1) auch zur Aufnahme anderer, hier nicht näher gezeigter Bearbeitungseinheiten, wie beispielsweise einem Fräswerkzeug oder einem Anreißwerkzeug geeignet. Dies führt jedoch hinsichtlich des Kollisionsschutzes (2) zu folgendem Problem. Einerseits ist die Meßsensorik (1) oftmals so empfindlich, daß eine Kollision mit geringen Kräften bereits zur Zerstörung der Meßsensorik (1) ausreicht. Das zum Auslenken des Kollisionsschutzes (2) erforderliche Drehmoment muß deshalb gering sein. Andererseits werden zur Bearbeitung des Werkstückes (7) mit den Bearbeitungseinheiten, wie beispielsweise dem Anreißwerkzeug oder dem Fräswerkzeug höhere Drehmomente benötigt. Der Kollisionsschutz (2) muß deshalb für diesen Fall derartig ausgestaltet sein, daß das zum Auslenken des Kollisionsschutzes (2) erforderliche Drehmoment relativ hoch ist.

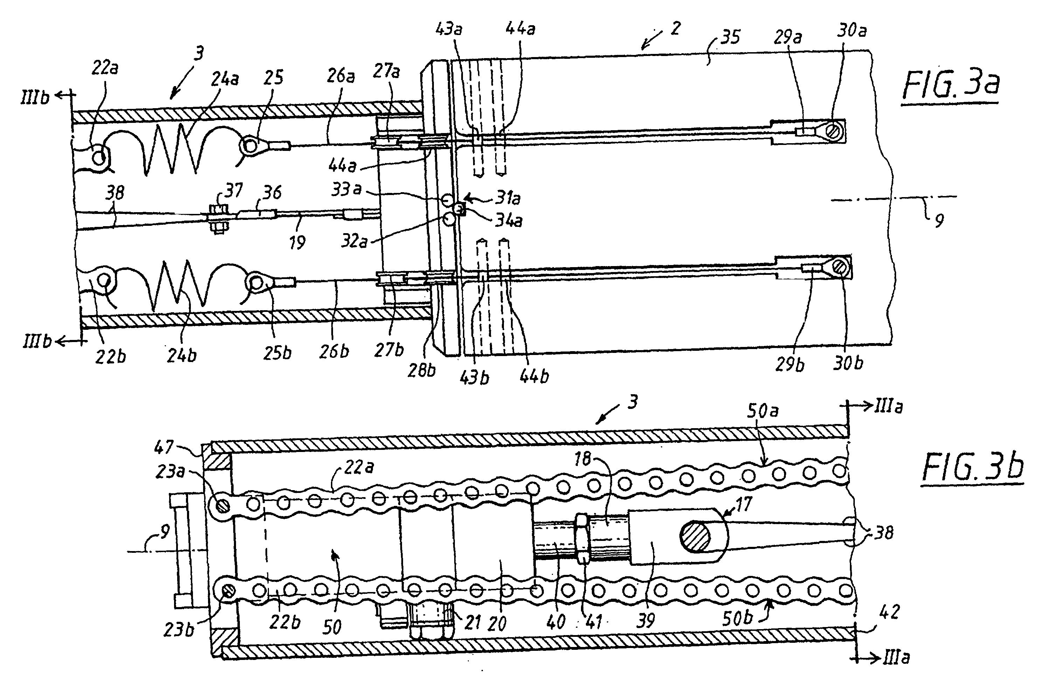

Um sowohl die Meßsensorik (1) wie auch die Bearbeitungseinheit mit der in Figur 1 dargestellten Koordinatenmeßmaschine (10) auf einfache Art und Weise benutzen zu können, wurde deshalb im Koordinatenmeßgerät (10) eine Erkennungseinheit (16) vorgesehen, die die Meßsensorik (1) automatisch erkennt, sowie ferner eine mit der Erkennungseinheit (16) verbundene Spanneinheit (17), die entsprechend dem Ergebnis der Erkennungseinheit (16) das zum Auslenken des Kollisionsschutzes (2) erforderliche Drehmoment einstellt. Die Figur 2 zeigt dies in einem einfachen Blockschaltbild.

Die Erkennungseinheit (16) kann an unterschiedlichen Stellen im Koordinatenmeßgerät angeordnet sein und auch unterschiedlich ausgeführt sein. Beispielsweise kann die Erkennungseinheit (16) als Firmware ausgebildet sein, die entweder im Ständer (4) oder aber im Meßarm (3) untergebracht ist. Sie kann gleichfalls auch in einem hier nicht mehr gezeigten Zentralcomputer des Koordinatenmeßgerätes angeordnet sein.

Die Erkennung in der Erkennungseinheit (16) erfolgt durch Prüfung einer in der Meßsensorik (1) vorliegenden Erkennungsinformation in Form einer analogen oder digitalen Information. Die Erkennungseinheit (16) prüft in diesem speziellen Beispiel das Vorliegen eines Widerstandswertes in der Meßsensorik. Es sind hierbei unterschiedliche Möglichkeiten gegeben. In einer besonders einfachen Version wird nur geprüft, ob es sich um eine Meßsensorik (1) oder um eine Bearbeitungseinheit handelt. Dazu weisen die Meßsensoriken zwei durch die Erkennungseinheit (16) abgreifbare Anschlüsse auf, die leitend miteinander verbunden sind, während die entsprechenden Anschlüsse der Bearbeitungseinheiten nicht leitend miteinander verbunden sind. Zur Erkennung der Meßsensorik (1) bzw. der Bearbeitungseinheit muß lediglich geprüft werden, ob zwischen den beiden Punkten eine leitende Verbindung besteht.

Die Erkennung kann jedoch auch weiter diversifiziert werden, indem die leitenden Verbindungen zwischen den Anschlußpunkten für unterschiedliche Meßsensoriken (1) und Bearbeitungseinheiten unterschiedliche Widerstandswerte zugeordnet werden, wobei von der Erkennungseinheit (16) aufgrund des Widerstandswertes die Meßsensorik (1) oder,die Bearbeitungseinheit erkannt wird.

Die Erkennungseinheit (16) kann gleichfalls derart ausgestaltet sein, daß sie das Vorliegen einer digitalen Information in der Meßsensorik prüft. Hierzu kann beispielsweise in der Meßsensorik eine irgendwie geartete digitale Information, beispielsweise in einem Halbleiterspeicher vorliegen, die die Meßsensorik (1) bzw. die Bearbeitungseinheit identifiziert.

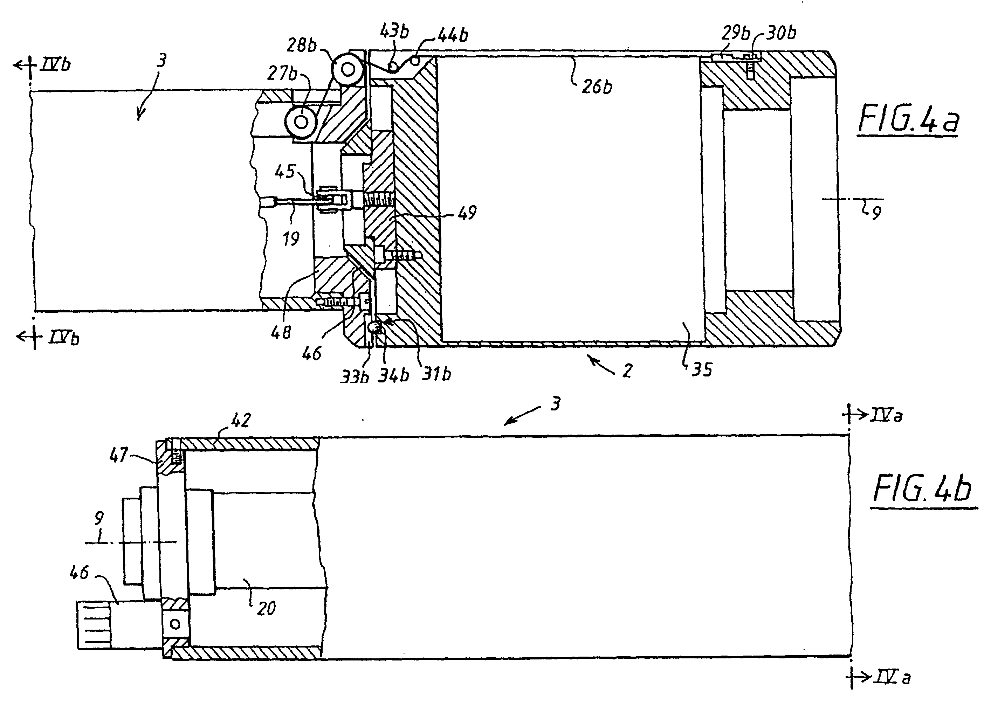

Im Zusammenhang mit den Figuren 3 und 4 soll nun die Spanneinheit (17) näher beschrieben werden. Figur 3 zeigt ausschnittsweise eine vergrößerte Aufsicht auf den Meßarm (3) sowie den hierin integrierten Kollisionsschutz (2) der Figur 1 wobei der Meßarm (3) im Aufriß gezeichnet ist. Die Spanneinheit (17) umfaßt hierbei eine Zugeinheit (50), die den Meßarm (3) und den Kollisionsschutz (2) miteinander verbindet und den Kollisionsschutz (2) und den Meßarm (3) mit einer durch die Erkennungseinheit (16) festgelegten Zugkraft gegeneinander zieht. Die Zugeinheit (50) weist dazu einen pneumatischen Zylinder (20) auf mit einer darin beweglich geführten Kolbenstange (40). Der pneumatische Zylinder (20) ist hierbei zur Aufbringung der Zugkraft vorzugsweise als sogenannter doppelt wirkender Zylinder (20) ausgestaltet, dessen Kolbenstange (40) sowohl aus dem Zylinder (20) herausgedrückt werden kann wie auch hineingezogen werden kann. Dazu ist der Zylinder (20) an der Austrittsöffnung der Kolbenstange (40) ebenfalls abgedichtet und mit einem zweiten Druckluftanschluß (21) versehen, wobei der erste Druckluftanschluß hier nicht gezeichnet ist, da er nicht benötigt wird.

Der pneumatische Zylinder (20) ist mit einem Rückteil (47) des Meßarmes (3) verbunden. Die Kolbenstange ihrerseits weist an ihrem Ende ein Gewinde auf, auf das eine Gabel (39) aufgeschraubt ist, wobei die Gabel (39) ihrerseits mit einem Stahlseil (38) verbunden ist. Am anderen Ende des Stahlseils (38) befindet sich, verbunden über eine Oese (36), ein weiteres Stahlseil (19) das ebenfalls an einer Gabel (45) befestigt ist. Die Gabel (45) ihrerseits ist über das Teil (49) fest mit dem Gehäuse (35) des Kollisionsschutzes (2) verbunden. Die Verbindung zwischen der Spanneinrichtung (17) und dem Kollisionsschutz (2) sollte derart ausgestaltet sein, daß die Zugkraft in etwa symmetrisch auf die zwischen dem Meßarm (3) und dem Kollisionsschutz (2) befindlichen Lager (31a,31b,31c) wirkt, was hier dadurch erreicht ist, daß die Gabel (45) mittig zwischen den Lagern (31a,31b,31c), also im Bereich der Längsachse (9) des Meßarms (3) am Kollisionsschutz (2), befestigt ist.

Das zum Auslenken des Kollisionsschutzes (2) erforderliche Drehmoment wird verändert, indem gesteuert durch die Erkennungseinheit (16) über den Druckluftanschluß (21) der pneumatische Zylinder (20) mit Druckluft beaufschlagt wird. Hierdurch wird der Kollisionsschutz (2) und der Meßarm (3) stärker gegeneinander gezogen, so daß das zur Auslenkung des Kollisionsschutzes notwendige Drehmoment hierdurch erhöht wird. Durch die Tatsache, daß die Spanneinheit (17) im Bereich der Längsachse (9) angreift, wird ermöglicht, daß die Zugkraft gleichmäßig auf die drei Lager (31a,31b,31c) verteilt wird.

Die so beschriebene Spanneinheit (17) kann sowohl für in Figur 1 gezeigte Meßarme verwendet werden, die horizontal ausgerichtet sind wie auch für die Meßarme von sogenannten Portalmeßmaschinen, bei denen ein Portal das zu vermessende Werkstück überspannt und der entsprechende Meßarm vertikal an dem das zuvermessende Werkstück überspannenden Teil des Portals aufgehängt ist.

Der in den Meßarm (3) integrierte Kollisionsschutz (2) ist vollkommen frei beweglich auf den Meßarm (3) aufgesetzt und wird lediglich durch Zugspannung in seiner Position gehalten. Zur lagegenauen Fixierung des Kollisionsschutzes (2) in einer definierten Position ist der Kollisionsschutz (2) über drei sternförmig angeordnete Lager (31a, 31b, 31c) auf der Abschlußplatte (48) des Meßarms (3) gelagert. In den Figuren 3 und 4 ist jedoch lediglich das im oberen Bereich angeordnete Lager (31a) sowie in Figur 4 eines der beiden im unteren Bereich angeordneten Lager (31b) sichtbar. Die Lager (31a, 31b, 31c), von denen hier nur beispielhaft das obere Lager (31a) beschrieben werden soll, bestehen jeweils aus zwei parallel nebeneinander befindlichen Rollen (32a,33a), die in der Abschlußplatte (48) des Meßarms (3) untergebracht sind sowie einer damit zusammenwirkenden Kugel (34a), die im Gehäuse (35) des Kollisionsschutzes (2) verankert ist und auf den beiden Rollen (32a, 33a) zum liegen kommt. Natürlich können die Rollen (32a,33a) auch im Kollisionsschutz (2) angeordnet sein und die Kugel (34a) im Meßarm (3). Da der Kollisionsschutz über drei sternförmig angeordnete Lager (31a, 31b, 31c) auf dem Meßarm (3) gelagert ist, wird hierdurch eindeutig die lagegenaue Position des Kollisionsschutzes (2) definiert, so daß der Kollisionsschutz (2) nach einer Auslenkung durch eine Kollision wieder reproduzierbar in seine ursprüngliche Lage zurückkehren kann.

Selbstverständlich können die Lager (31a,31b,31c) auch anders aufgebaut sein. Sie können beispielsweise stattdessen zwei nebeneinander angeordnete Kugeln und eine damit zusammenwirkende Rolle umfassen, die auf den beiden Kugeln zum liegen kommt.

Um zusätzlich nach einer Auslenkung des Kollisionsschutzes (2) die Rückführung in seine Normalposition zu verbessern ist zusätzlich am Gehäuse (35) des Kollisionsschutzes (2) ein konisches Teil (46) befestigt, das mit der Abschlußplatte (48) des Meßarmes (3) derart zusammenwirkt, daß es bei Auslenkung des Kollisionsschutzes (2) in etwa wieder in seine ursprüngliche Position geführt wird, die dann letztendlich durch die drei sternförmig angeordneten Lager (31a, 31b, 31c) festgelegt wird.

Vorzugsweise liegt bei jedem der Lager (31a, 31b, 31c) zwischen den Rollen (32a, 32b, 32c) und den Rollen (33a, 33b, 33c) eine elektrische Spannung an, die über die Kugeln (34a, 34b, 34c) überbrückt wird. Beim Auslenken des Kollisionsschutzes (2) gegenüber dem Meßarm (3) wird dann bei wenigstens einem der Lager (31a, 31b, 31c) die Kugel von den Rollen abheben und der in Normalposition geschlossene Stromkreis hierdurch geöffnet werden. Diese Unterbrechung des Stromkreises kann durch eine entsprechende Schaltung im Koordinatenmeßgerät (10) erkannt werden und führt zum sofortigen Stillstand des Koordinatenmeßgerätes. Zusätzlich veranlaßt die Schaltung die Entspannung der Zugeinheit (50), sodaß die Zugeinheit (50) keine Zugkraft mehr auf den Kollisionsschutz (2) ausübt, um hierdurch das zum weiteren Auslenken des Kollisionsschutzes (2) notwendige Drehmoment zu reduzieren. Hierdurch wird eine Zerstörung der Bearbeitungeinheit verhindert. Das Entspannen kann hierbei derart realisiert werden, indem ein dafür vorgesehenes Ventil geöffnet wird, sodaß der Druck im pneumatischen Zylinder (20) sofort entweicht.

In einer etwas kostengünstigeren Lösung können auch zwei hier nicht näher dargestellte Tastschalter im Kollisionsschutz (2) vorgesehen werden, deren Tastfläche im Normalfall auf dem Meßarm (3) aufliegt, sodaß sich die Tastschalter im angetasteten Zustand befinden. Hierdurch ist ein Stromkreis, der über beide Tastschalter läuft, geschlossen. Sobald der Kollisionsschutz (2) auslenkt, öffnet einer der Tastschalter, sodaß der Stromkreis dann unterbrochen ist, was zum sofortigen Stillstand des Koordinatenmeßgerätes und zum Entspannen der Zugeinheit (50) in der Spanneinheit (17) führt.

Für den hier dargestellten Fall, daß es sich um ein Ständermeßgerät handelt, bei dem der Meßarm (3) des Koordinatenmeßgerätes (10) horizontal ausgerichtet ist, sind im Meßarm (3) zusätzlich zwei Vorspanneinheiten (50a, 50b) vorgesehen, die das durch die Gewichtskraft des Kollisionsschutzes (2) und der Meßsensorik (1) bzw. der Bearbeitungseinheit entstehende Drehmoment aufnehmen. Die Vorspanneinheiten (50a,50b) umfassen hierbei ebenfalls Zugeinheiten (24a,24b), die hierbei sehr einfach in Form von Federn vorgesehen sind. Das eine Ende der Zugeinheiten (24a; 24b) bzw. Federn ist hierbei mit einem Lochband (22a, 22b), die in unterschiedlichen Positionen an den Stiften (23a,23b); befestigt werden kann, verbunden und das andere Ende der Zugeinheiten (24a, 24b) über Stahlseile (26a, 26b) mit dem Gehäuse (35) des Kollisionsschutzes (2). Um das Stahlseil (26) mit den Zugeinheiten (24a, 24b) und andererseits mit dem Kollisionsschutz (2) verbinden zu können ist an den Enden der Stahlseile (26a, 26b) jeweils eine Öse (25a, 25b) und (29a, 29b) befestigt, wobei die Ösen (29a, 29b) über jeweils eine Schraube (30a, 30b) im Kollisionsschutz (2) verschraubt ist. Um das Drehmoment aufnehmen zu können, werden hierbei die Zugeinheiten (24a,24b) bzw. Federn über das Lochband (22a,22b) soweit gespannt, bis das durch die Gewichtskraft des Kollisionsschutzes (2) und der Meßsensorik (1) entstehende Drehmoment vollständig aufgenommen ist

Die Vorspanneinheiten (50a,50b), können für eine einfachere Bedienung derart ausgestaltet sein, daß die Lochbänder (22a,22b) um einige Lochabstände gekürzt und an ihren Enden mit einer Kette verbunden sind. Für die Kette kann anstelle der Stifte (23a,23b) zur Befestigung ein zentraler Stift vorgesehen sein.

In der Vorspanneinheit (50a, 50b) ist somit eine Zugeinheit vorgesehen, die den Meßarm (3) und den Kollisionsschutz (2) verbindet und den Kollisionsschutz (2), sowie den Meßarm (3) mit einer einstellbaren Zugkraft gegeneinander zieht. Wie insbesondere aus Figur 4 hervorgeht, sind die Stahlseile (26a,26b) über zwei am Meßarm (3) befestigte Umlenkrollen (27a, 27b und 28a, 28b) sowie im Kollisionsschutz (2) über zwei hierin befestigte Umlenkstifte (43a, 43b und 44a, 44b) derart umgelenkt, daß die Zugkraft der Seile im oberen Bereich des Kollisionsschutzes (2) auf den Kollisionsschutz (2) wirkt.

Zusätzlich sind die Seile (26a,26b) der Vorspanneinheiten durch die Umlenkrollen (28a, 28b) und die Umlenkstifte (43a, 43b) derart geführt, daß zusätzlich noch die durch die Gewichtskraft des Kollisionsschutzes (2) und der Meßsensorik (1) entstehende Querkraft aufgenommen wird, da die Seile (26a,26b) den Kollisionsschutz (2) nicht nur parallel zur Längsachse (9) mit einer Kraft beaufschlagen sondern zusätzlich auch eine Kraftkomponente senkrecht zur Längsachse (9) erzeugt wird, da die Rollen (28a, 28b) höher aufgehängt sind als die Umlenkstifte (43a, 43b), so daß die resultierenden Zugkräfte auf den Kollisionsschutz (2) sowohl parallel zur Längsachse (9) auf den Meßarm zugerichtet sind wie auch senkrecht zur Längsachse (9) nach oben.

Durch die Aufnahme des durch die Gewichtskraft des Kollisionsschutzes (2) und der Meßsensorik (1) entstehenden Drehmomentes und der Querkraft kann erreicht werden, daß bei aufgespannter Meßsensorik (1) die Kräfteverteilung auf die drei Lager (31a,31b,31c), weitestgehend symmetrisch ist und im wesentlichen in Richtung der Längsachse (9) des Meßarms (3) wirkt. Dies hat den Vorteil, daß das notwendige Drehmoment, um den Kollisionsschutz (2) über jeweils zwei der drei Lager (31a,31b,31c) auszulenken für alle drei Möglichkeiten gleich groß ist. Außerdem kann hierdurch für jede der möglichen Auslenkungsrichtungen das zur Auslenkung des Kollisionsschutzes (2) notwendige Drehmoment minimiert werden, sodaß der Kollisionsschutz (2) bereits bei relativ kleinen Drehmomenten ausgelenkt wird um hierdurch die empfindliche Meßsensorik (1) zu schützen. Außerdem kann die Spanneinheit (17) ungenützt bleiben und braucht erst dann eingesetzt zu werden, wenn eine Bearbeitungseinheit aufgesetzt wird.

Bedingt durch die Verbindung der Zugeinheiten mit dem Kollisionsschutz (2) über Seile (19,26a,26b), kann der Kollisionsschutz (2) sehr weit ausgelenkt werden, da die Seile (19,26a,26b) flexibel sind und bei einer Auslenkung des Kollisionsschutzes (2) verbogen werden können.

## Patentansprüche

1. Koordinatenmeßgerät zur Vermessung von Werkstücken (7) mit einem beweglichen Meßarm zur Aufnahme einer Meßsensorik (1) oder einer Bearbeitungseinheit zur Bearbeitung des werkstückes, wobei der Meßarm (3) einen Kollisionsschutz (2) umfaßt, der bei Kollision der Meßsensorik (1) oder der Bearbeitungseinheit mit einem Gegenstand quer zur Längsachse (9) des Meßarmes (3) auslenkbar ist und hierdurch eine Beschädigung der Meßsensorik (1) oder der Bearbeitungseinheit vermeidet, **dadurch gekennzeichnet, daß** im Koordinatenmeßgerät eine Erkennungseinheit (16) vorgesehen ist, die so ausgestattet ist, daß sie die Meßsensorik (1) oder die Bearbeitungseinheit automatisch erkennt und daß ferner eine mit der Erkennungseinheit (16) verbundene Spanneinheit (17) vorgesehen ist, die so ausgestattet ist, daß sie entsprechend dem Ergebnis der Erkennungseinheit (16) das zum Auslenken des Kollisionsschutzes erforderliche Drehmoment einstellt.

2. Koordinatenmeßgerät nach Anspruch 1, **dadurch gekennzeichnet, daß** die Spanneinheit eine Zugeinheit (50) umfaßt, die den Meßarm und den Kollisionsschutz miteinander verbindet und den Kollisionsschutz sowie den Meßarm mit einer durch die Erkennungseinheit festgelegten Zugkraft gegeneinander zieht.

3. Koordinatenmeßgerät nach Anspruch 2, **dadurch gekennzeichnet, daß** die Zugeinheit (50) einen pneumatischen Zylinder (20) und eine darin beweglich geführte Kolbenstange (40) umfaßt.

4. Koordinatenmeßgerät nach Ansprüchen 2 bis 3, **dadurch gekennzeichnet, daß** die Zugeinheit derart am Kollisionsschutz befestigt ist, daß die Zugkraft in etwa symmetrisch auf zwischen dem Meßarm und dem Kollisionsschutz befindliche Lager (31a,31b,31c) wirkt.

5. Koordinatenmeßgerät nach Ansprüchen 1 bis 4, **dadurch gekennzeichnet, daß** der Meßarm horizontal ausgerichtet ist.

6. Koordinatenmeßgerät nach Anspruch 5, **dadurch gekennzeichnet, daß** zusätzlich wenigstens eine Vorspanneinheit (50a, 50b) vorgesehen ist, die das durch die Gewichtskraft des Kollisionsschutzes und der Meßsensorik entstehende Drehmoment aufnimmt.

7. Koordinatenmeßgerät nach Anspruch 6, **dadurch gekennzeichnet, daß** die Vorspanneinheit derart ausgestaltet ist, daß zusätzlich die durch die Gewichtskraft des Kollisionsschutzes und der Meßsensorik entstehende Querkraft aufgenommen wird.

8. Koordinatenmeßgerät nach einem der Ansprüche 6 bis 7, **dadurch gekennzeichnet, daß** in der Vorspanneinheit eine Zugeinheit (24a, 24b) vorgesehen ist, die mit dem Meßarm und dem Kollisionsschutz verbunden ist und den Kollisionsschutz sowie den Meßarm mit einer einstellbaren Zugkraft gegeneinander zieht.

9. Koordinatenmeßgerät nach Anspruch 8, **dadurch gekennzeichnet, daß** die Zugkraft im oberen Bereich des Kollisionsschutzes auf den Kollisionsschutz wirkt.

10. Koordinatenmeßgerät nach Anspruch 1, **dadurch gekennzeichnet, daß** die Erkennungseinheit eine in der Meßsensorik vorliegende Erkennungsinformation prüft.

11. Koordinatenmeßgerät nach Anspruch 10, **dadurch gekennzeichnet, daß** die Erkennungsinformation ein Widerstandswert ist.

12. Koordinatenmeßgerät nach einem der Ansprüche 2, 3, 8 oder 9, **dadurch gekennzeichnet, daß** die Zugeinheit über Seile (19, 26a, 26b) mit dem Kollisionsschutz verbunden ist.

13. Koordinatenmeßgerät nach Anspruch 1, **dadurch gekennzeichnet, daß** der Kollisionsschutz über drei sternförmig angeordnete Lager (31a, 31b, 31c) auf dem Meßarm gelagert ist, so daß der Kollisionsschutz gegenüber dem Meßarm eine eindeutig definierte Position einnimmt.

14. Koordinatenmeßgerät nach einem der Ansprüche 2 oder 3, **dadurch gekennzeichnet daß** sich beim Auslenken des Kollisionsschutzes die Zugeinheit entspannt, so daß die Zugeinheit keine Zugkraft mehr auf den Kollisionsschutz ausübt.

## Claims

1. Coordinate measuring instrument for measuring workpieces (7), having a movable measuring arm for holding a measuring sensor system (1) or a machining unit for machining the workpiece, the measuring arm (3) comprising a collision protector (2) which, upon collision of the measuring sensor system (1) or the machining unit with an object transverse to the longitudinal axis (9) of the measuring arm (3), can be deflected and thereby avoids damaging the measuring sensor system (1) or the machining unit, **characterized in that** provided in the coordinate measuring instrument is a detection unit (16) which is equipped in such a way that it automatically detects the measuring sensor system (1) or the machining unit, and **in that** there is provided, furthermore, a clamping unit (17) which is connected to the detection unit (16) and is equipped in such a way that the torque required to deflect the collision protector in accordance with the result of the detection unit (16) is set by said clamping unit (17).

2. Coordinate measuring instrument according to Claim 1, **characterized in that** the clamping unit comprises a tensioning unit (50) which connects the measuring arm and the collision protector to one another and pulls the collision protector and the measuring arm against one another with a tensile force fixed by the detection unit.

3. Coordinate measuring instrument according to Claim 2, **characterized in that** the tensioning unit (50) comprises a pneumatic cylinder (20) and a piston rod (40) guided movably therein.

4. Coordinate measuring instrument according to Claims 2 to 3, **characterized in that** the tensioning unit is fastened on the collision protector in such a way that the tensile force acts approximately symmetrically on bearings (31a, 31b, 31c) situated between the measuring arm and the collision protector.

5. Coordinate measuring instrument according to Claims 1 to 4, **characterized in that** the measuring arm is aligned horizontally.

6. Coordinate measuring instrument according to Claim 5, **characterized in that** there is provided in addition at least one prestressing unit (50a, 50b) which takes up the torque produced by the weight force of the collision protector and the measuring sensor system.

7. Coordinate measuring instrument according to Claim 6, **characterized in that** the prestressing unit is configured in such a way that the transverse force produced by the weight force of the collision protector and the measuring sensor system is additionally taken up.

8. Coordinate measuring instrument according to one of Claims 6 to 7, **characterized in that** provided in the prestressing unit is a tensioning unit (24a, 24b) which is connected to the measuring arm and the collision protector and pulls the collision protector and the measuring arm against one another with an adjustable tensile force.

9. Coordinate measuring instrument according to Claim 8, **characterized in that** the tensile force in the upper region of the collision protector acts on the collision protector.

10. Coordinate measuring instrument according to Claim 1, **characterized in that** the detection unit checks an item of detection information present in the measuring sensor system.

11. Coordinate measuring instrument according to Claim 10, **characterized in that** the item of detection information is a resistance value.

12. Coordinate measuring instrument according to one of Claims 2, 3, 8 or 9, **characterized in that** the tensioning unit is connected to the collision protector via cables (19, 26a, 26b).

13. Coordinate measuring instrument according to Claim 1, **characterized in that** the collision protector is mounted on the measuring arm via three bearings (31a, 31b, 31c) arranged in the shape of a star, such that the collision protector assumes a uniquely defined position relative to the measuring arm.

14. Coordinate measuring instrument according to one of Claims 2 or 3, **characterized in that** upon deflection of the collision protector the tensioning unit is relieved, such that the tensioning unit exerts no further force on the collision protector.

## Revendications

1. Appareil de mesure de coordonnées pour l'étalonnage de pièces (7) muni d'un bras de mesure mobile destiné à recevoir un capteur de mesure (1) ou une unité de d'usinage pour usiner la pièce, le bras de mesure (3) comprenant une protection anticollision (2) qui peut être déviée vers l'extérieur en cas de collision du capteur de mesure (1) ou de l'unité d'usinage avec un objet transversal par rapport à l'axe longitudinal (9) du bras de mesure (3) et qui évite ainsi que le capteur de mesure (1) ou l'unité d'usinage soit endommagé, **caractérisé en ce qu'**une unité d'identification (16) est prévue dans l'appareil de mesure de coordonnées, laquelle est configurée de telle manière à identifier automatiquement le capteur de mesure (1) ou l'unité d'usinage, et qu'il est en plus prévu une unité de serrage (17) reliée à l'unité d'identification (16), laquelle est configurée de telle manière à régler le couple nécessaire à la déviation de la protection anticollision en fonction du résultat de l'unité d'identification (16).

2. Appareil de mesure de coordonnées selon la revendication 1, **caractérisé en ce que** l'unité de serrage comprend une unité de traction (50) qui relie ensemble le bras de mesure et la protection anticollision et tire la protection anticollision et le bras de mesure l'un vers l'autre avec une force de traction déterminée par l'unité d'identification.

3. Appareil de mesure de coordonnées selon la revendication 2, **caractérisé en ce que** l'unité de traction (50) comprend un vérin pneumatique (20) et une bielle (40) mobile guidée dans celui-ci.

4. Appareil de mesure de coordonnées selon les revendications 2 à 3, **caractérisé en ce que** l'unité de traction est fixée à la protection anticollision de telle manière à ce que la force de traction agisse sur le support (31a, 31b, 31c) qui se trouve dans une position à peu près symétrique entre le bras de mesure et la protection anticollision.

5. Appareil de mesure de coordonnées selon les revendications 1 à 4, **caractérisé en ce que** le bras de mesure est dirigé horizontalement.

6. Appareil de mesure de coordonnées selon la revendication 5, **caractérisé en ce qu'**il est en plus prévu au moins une unité de précontrainte (50a, 50b) qui absorbe le couple produit par la force gravitationnelle de la protection anticollision et du capteur de mesure.

7. Appareil de mesure de coordonnées selon la revendication 6, **caractérisé en ce que** l'unité -de précontrainte est configurée de telle manière qu'elle absorbe en plus la force transversale produite par la force gravitationnelle de la protection anticollision et du capteur de mesure.

8. Appareil de mesure de coordonnées selon l'une des revendications 6 à 7, **caractérisé en ce qu'**une unité de traction (24a, 24b) est prévue dans l'unité de précontrainte, laquelle est reliée avec le bras de mesure et la protection anticollision et tire le bras de mesure et la protection anticollision l'un vers l'autre avec une force de traction réglable.

9. Appareil de mesure de coordonnées selon la revendication 8, **caractérisé en ce que** la force de traction dans la zone supérieure de la protection anticollision agit sur la protection anticollision.

10. Appareil de mesure de coordonnées selon la revendication 1, **caractérisé en ce que** l'unité d'identification contrôle une information d'identification présente pour le capteur de mesure.

11. Appareil de mesure de coordonnées selon la revendication 10, **caractérisé en ce que** l'information d'identification est une valeur de résistance.

12. Appareil de mesure de coordonnées selon l'une des revendications 2, 3, 8 ou 9, **caractérisé en ce que** l'unité de traction est reliée à la protection anticollision par le biais de câbles (19, 26a, 26b).

13. Appareil de mesure de coordonnées selon la revendication 1, **caractérisé en ce que** la protection anticollision repose sur le bras de mesure par le biais de trois supports (31a, 31b, 31c) disposés en étoile de manière à ce que la protection anticollision prenne une position parfaitement définie par rapport au bras de mesure.

14. Appareil de mesure de coordonnées selon l'une des revendications 2 ou 3, **caractérisé en ce que** l'unité de traction se détend lors de la déviation de la protection anticollision de manière à ce que l'unité de traction n'exerce plus aucune force de traction sur la protection anticollision.
